Europäisches Patentamt

**European Patent Office**

**Office européen des brevets**

(11) Publication number: **0 204 663**

**A1**

(12) # EUROPEAN PATENT APPLICATION

(21) Application number: **86830106.0**

(22) Date of filing: **02.05.86**

(51) Int. Cl.⁴: **F 16 D 25/08**

(30) Priority: **09.05.85 IT 488585 U**

(43) Date of publication of application:
**10.12.86 Bulletin 86/50**

(84) Designated Contracting States:
**DE FR GB NL SE**

(71) Applicant: **OLEODINAMICA PEDERZANI E ZINI S.P.A.**
**Via Persicetana, 2**
**Calderara Di Reno Bologna(IT)**

(72) Inventor: **Baldi, Guido**
**Via Ortolani, 7**
**Bologna(IT)**

(74) Representative: **Dall'Olio, Giancarlo**
**INVENTION s.n.c. Via Arienti 26**
**I-40124 Bologna(IT)**

(54) Co-axial pneumatic clutch for integration with the gearbox power take-off of industrial vehicles.

(57) The clutch includes a piston 8, hollow along its axis and inserted within a hole 5 of a casing 1 of a power take-off 50, an annular chamber 10, which may be connected by means of a duct 11 to a source of compressed air, a splined sleeve 15, coupled to a piston 8 and a ring 7 which have the function of guiding the piston 8 along its axis.

The sleeve 15 is coupled to a splined shaft 25 of a mechanical device driven by the power take-off 50, and when the piston 8 is moved by means of the introduction of compressed air into the chamber 10, it is coupled to the splined shaft 23 of a gearbox by which the clutch is also driven.

In this way rotation is transmitted. Resilient means 14 effect the movement of the piston 8 and sleeve 15 in the opposite direction thus uncoupling the latter from shaft 23, of the mechanical device, when the chamber 10 is emptied.

FIG.1

"Co-axial pneumatic clutch for integration with the gearbox power take-off of industrial vehicles".

It is known that the driven shaft in the gearbox of several industrial vehicles is, besides its principal use, employed to drive the so-called power take-off, equipped with a mechanical clutch, and intended for the rotational powering of suitable mechanical devices, e.g.: hydraulic pumps. The technical sector under consideration in the present invention concerns mechanical clutches integrated on power take-offs that are pneumatically controlled.

It is known that such clutches are made operative or inoperative depending upon which of two extreme positions is occupied by a sliding coupling, an integral part of the said clutches; in effect the coupling is, in these positions, respectively coupled to and uncoupled from the above mentioned driven shaft.

In the first range of known technical solutions the means employed for the pneumatic control are separate from the axis of rotation of power take-off; these means are essentially constituted by a pneumatic piston which, through the use of a forked arm or gudgeon and sliding block, effects the movement of the above-mentioned sleeve.

In a later range of known solutions the means for moving the sleeve are positioned co-axially in relation to the latter; which entails enclosure of the power take-off in the area around the sleeve head which doesn't engage with the driven shaft of the gearbox.

The object of the present invention is to propose a co-axial pneumatic clutch that effects the co-axial coupling between the driven shaft of the gearbox and the power take-off, of which the said clutch is an integral part, and which doesn't entail the use of a seal between rotating means.

Another object of the invention consists in proposing a pneumatic clutch designed in such a way as to make the relevant input and output couplings as accessible as possible.

A further object of the invention is that of proposing that the above-mentioned clutch be composed of means that may be assembled and disassembled with ease and rapidity.

The above-mentioned objects are obtained by the invention through the use of a co-axial pneumatic clutch which is integrated with the gearbox power take-off on industrial vehicles. It is of the type including a casing, and forms a single unit with a corresponding mechanical device. It features an axial hole, and is mounted immoveably to a gearbox in such a way as to render co-axial the externally accessible drive-shaft of the gearbox with the above-mentioned hole. The said clutch is characterised by the fact that it includes: a piston - -, hollow along its axis, inserted co-axially in the hole of the casing, guided by the hole itself, movable along its axis within this latter between two extreme positions, respectively first and second; means for driving the piston along its axis from the first to the second extreme position, and opposing agents with resilient means working on the piston itself; a sleeve that is partially inserted co-axially within the hollow piston, freely coupled to the same piston by which it is driven along its axis in both directions, the said sleeve coupled at one end to the previously mentioned mechanical device independently of whichever postion is occupied

- 3 -

0204663

by the piston, and at the other end coupling to and uncoupling from the abovementioned drive-shaft when the piston is in the second and first extreme positions respectively. The characteristics of the invention that do not emerge from what has been said above, will be made evident hereafter with particular reference to the set of drawings in which:

- figures 1 and 2 show a partial cross-section view of the present clutch with the piston concerned in the first and second extreme positions respectively;
- figure 3 illustrates the clutch viewed from direction A in the preceding figures.

With reference to the said figures, 50 gives an overall indication of a power take-off including a rectangular-section casing (e.g. square section) 1, with lugged corners 2 through the holes 3 in which known means (not illustrated) are used to lock it solidly to a gearbox 4 (schematically indicated) in a single unit with either the power take-off 50 or mechanical device (e.g.: hydraulic pump). The casing is traversed along its axis by a hole 5 of circular cross-section, which undergoes a sharp reduction in its cross-section corresponding with the internal end portion 5a: thus creating a projection perpendicular to the axis of the casing.

A circular centering rim 27 is located on the internal head of the casing 1, co-axial to the hole 5, in order that the unit constituted by the power take-off 50 and by the mechanical device may be mounted on the gearcase 4, the above-mentioned rim 27 is inserted into a corresponding seat 26 located on the gearbox itself; the head of the drive shaft 23 of the gearbox 4 is accessible as a result of this seat.

Since the shaft 23 and the seat 26 are co-axial, the shaft 23 is consequently co-axial with the power take-off 50 (in particular the aforementioned hole 5).

A ring 7 is inserted within hole 5, the internal surface of which serves as a guide for piston 8, which is hollow along its axis; a "seeger" ring 39, inserted in a circumferential groove located on the surface formed by hole 5, prevents the ring 7 from sliding out in the direction idicated by H, and at the same time constitutes a stop for the external head 8a of the piston.

The diameter of the internal head 8b of the piston is practically equal to the diameter of hole 5, such that the piston 8 is guided along its axis by both the internal surface of hole 5 and the internal surface of ring 7.

The hole 5, the piston 8 and relative internal head 8b, and the ring 7 jointly form an annular chamber 10; to which are fitted seals 12a and 12b, ensuring a perfect seal between the chamber and the outside environment.

The chamber 10 is, by means of a duct 11 situated in the body of the casing, connected to a suitable source of compressed air (not illustrated), such that the afforesaid piston is subjected to a force which moves it in the direction indicated by K until it strikes against stop 6.

The piston 8 features an annular projection 13 on its internal body, between which latter and the stop 6 a helical spring 14 is interposed, the function of which is explained below.

When the chamber 10 is empty, the spring 14 keeps the piston 14 held against the "seeger" 39, in the first extreme position P1 of the piston.

When the chamber 10 comes under pressure (obviously under a level of pressure exceeding a predetermined minimum), the piston 8 is moved in direction K until it strikes against stop 6: the second characteristic position P2 of the piston; the movement of the piston in direction K is opposed by the resilient reaction of the spring.

A splined sleeve 15 is positioned within hole 5, moving freely across the final portion 5a of the same hole; the external part of sleeve 15 features a shoulder 16 which, in combination with a ring stop (or spacer) 17 (prevented from sliding out in direction H by a "seeger" 18 keyed into the same sleeve), forms an annular seat 19 to which the annular projection 13 of the piston is coupled, such that this latter synchronously draws the sleeve 15 in both directions H and K.

Within the extreme portions of the hole 20 passing through the sleeve 15 there are two "female" type splines, 21 and 22 respectively; spline 21 couples with a corresponding ("male" type) spline on the driven shaft 23 of the gearbox 4 (when the sleeve moves in direction K), whilst spline 22 is coupled to a complementary ("male" type) spline on the shaft 25 of the above-mentioned mechanical device.

As has been stated previously, the mounting of the power take-off - mechanical device to the gearbox 4, renders the shaft 23 of the gearbox co-axial with the hole 5.

Under the aforementioned conditions, the pressurising of the chamber 10 causes the movement of the piston 8 from P1 to P2, drawing the sleeve 15 in the same direction, thus coupling spline 21 to the driven shaft 23.

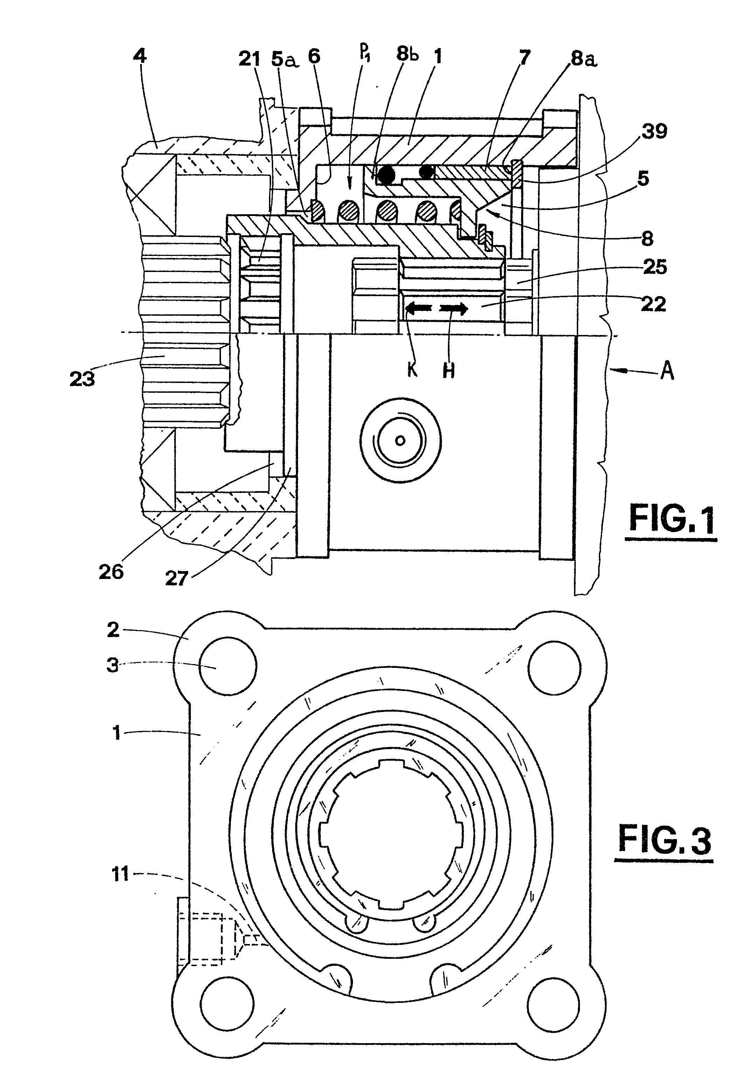

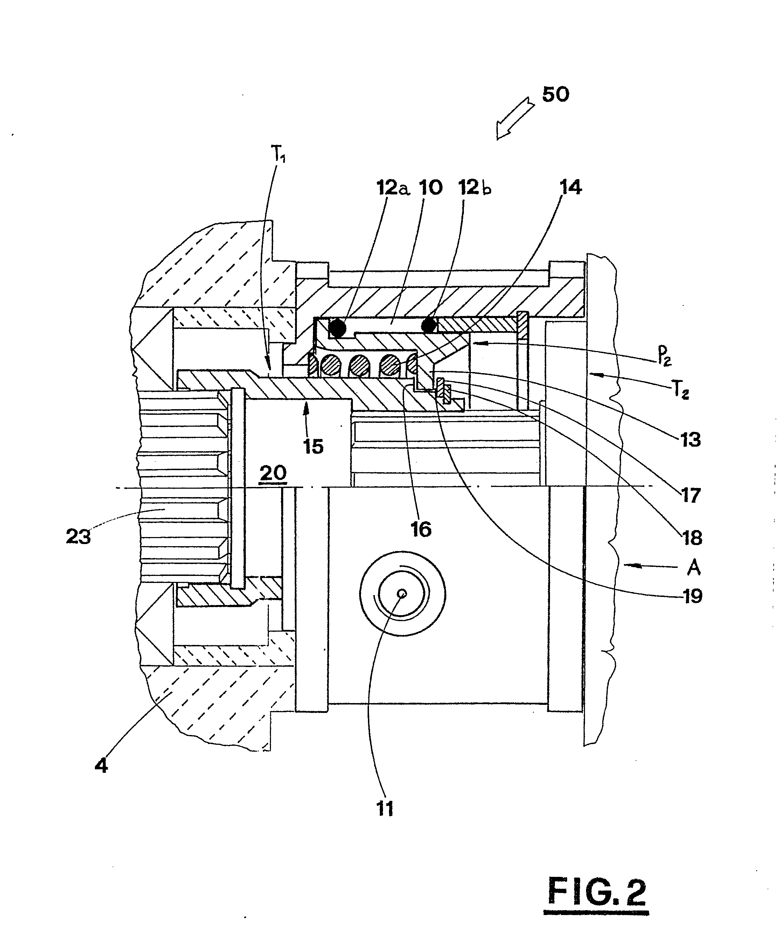

The rotation of shaft 23 causes the sleeve 15 to revolve as well as the shaft 25, coupled to this latter; this does not cause the piston 8 to revolve because there is ample free-play between the groove 19 and the annular projection 13, and there is consequently only a light slip between the same annular projection 13 and the surfaces forming seat 19. Emptying of the chamber 10 causes the piston to move from P2 (fig. 2) to P1 (fig. 1): the sleeve 15 uncouples from the shaft 23 of the gearbox 4.

Under the above-mentioned conditions the sleeve 15 is stabilised (that is to say it does not oscillate in respect to the axis concerned) in that it is coupled to the shaft 25 of the mechanical device.

To sum up, the clutch described above leaves the faces of the respective heads T1 and T2 free: thus allowing co-axial connection between the driven shaft 23 and the shaft 25. Another advantagious feature worthy of emphasis is the fact that the particular conformation of the pneumatic means (chamber 10), as well as the means for moving the sleeve 15 (that is to say the piston 8), allow one to "carry" the compressed air to the chamber 10 by means of the duct 11, situated in the lateral portion of the casing 1 and not the heads T1 and T2 of the clutch 50.

The positions in which sleeve 15 is coupled to and uncoupled from shaft 23 are determined solely by the striking of the piston 8 against stop 6 and against the "seeger" 39.

Furthermore, the seal between the chamber 10 and the exterior presents no special problems concerning the piston 8 which moves along its axis only when passing from P1 to P2, and vice versa, and remains still in the operative and inoperative positions of the clutch.

Finally, the clutch which is the subject of this invention is composed of a limited number of elements, each one of which can be constructed by means of simple technological operations; the assembly of the said components is quick and easy, as is equally the dismantling of the same components, all of which effectively cuts the costs of producing the clutch.

It is understood that the description supplied herein is an unlimited example such that variations in the construction details described above will not affect the protective framework afforded to the invention as claimed hereinafter.

0204663

CLAIMS

1) Pneumatic co-axial clutch for integration with the gearbox power take-off on industrial vehicles of the type including a casing 1 that features an axial hole 5, the said casing forming a single unit with a corresponding mechanical device, and mounted immovably to a gearbox 4 in such a way as to render co-axial the externally accessible drive-shaft of the gearbox 23 with the above-mentioned hole 5, the said clutch being characterised by the fact that it includes: a piston 8, hollow along its axis, inserted co-axially in the hole 5 of the casing 1, guided by the hole itself, movable along its axis within this latter between two extreme positions, P1 and P2, respectively first and second; means for driving the piston 8 along its axis from the first to the second extreme position, and opposing agents with resilient means 14 working on the piston itself; a sleeve 15 that is partially inserted co-axially within the hollow piston 8, freely coupled to the same piston 8 by which it is driven along its axis in both directions H and K, the said sleeve 15 coupled at one end to the previously mentioned mechanical device 25 independently of whichever postion is occupied by the piston 8, and at the other end coupling to and uncoupling from the abovementioned drive-shaft 23 when the piston 8 is in the second P2 and first P1 extreme positions respectively.

2) Clutch according to claim 1 characterised by the fact that the means for moving the piston along its axis is constituted by an airtight annular chamber 10, jointly defined by the surfaces forming the hole 5 which guides the piston and this latter, and which may be connected, by means of a duct 11 passing through the casing, to a source of compressed air.

3) Clutch according to claim 2, in which the diameter of the piston 8 is inferior to that of the hole passing through the casing, and the said piston is guided along its axis by ring 7 inserted between the former and the surface forming the said hole which passes through the casing; the said clutch is characterised by the fact that the above-mentioned airtight annular chamber 10 is defined by the internal head 8a of the piston 8, with a diameter practically equal to the diameter of the aforementioned hole, by the above-mentioned ring 7, by the previously mentioned piston and finally by the above-mentioned surface forming the hole 5 which passes through the casing.

4) Clutch according to claim 1 characterised by the fact that the above-mentioned piston features, on its internal surface, an annular projection 13 inserted with free play into a corresponding annular groove 19 located on the aforementioned sleeve 15, the said annular groove 19 being defined on one side by a shoulder 16 formed in the said sleeve 15, and on the other side by at least one ring stop 17 keyed into the same sleeve 15.

5) Clutch according to claim 1 characterised by the fact that there is a stop 6 situated within axial hole 5, which is brought about by a sudden reduction in the diameter of the said hole, acting as a stop for one end of the said resilient means 14, the other end of which is stopped by an annular projection 13 formed within the piston 8; and by the fact that the above-mentioned extreme positions P1 and P2 of the piston are obtained by means of the piston itself striking respectively against a ring 39 inserted within a circumferential groove formed within the surface defining the aforementioned hole, and against the previously mentioned stop 6.

0204663

FIG.1

FIG.3

0204663

50

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 445 465  (VEB IFA-GETRIEBEWERKE) * Whole document * | 1-5 | F 16 D   25/08 |
| X | US-A-4 061 216  (SULLIVAN) * Whole document * | 1-3 | |
| X | FR-A-2 187 054  (SKF INDUSTRIAL) * Whole document * | 1,3 | |

TECHNICAL FIELDS SEARCHED (Int. Cl.4)

F 16 D   25/00

The present search report has been drawn up for all claims

| Place of search | Date of completion of the search | Examiner |
|---|---|---|
| THE HAGUE | 08-07-1986 | BALDWIN D.R. |